# EUROPÄISCHE PATENTSCHRIFT

(11) **EP 1 554 519 B1**
(45) Veröffentlichungstag und Bekanntmachung des Hinweises auf die Patenterteilung: **29.03.2006**
(21) Anmeldenummer: 03809308.4
(22) Anmeldetag: 22.10.2003
(51) Int. Cl.: F16M 11/14, F16C 11/06

(54) **GELENKIGE AUFHÄNGUNG**
ARTICULATED SUSPENSION
SUSPENSION ARTICULEE

(30) Priorität: 25.10.2002 DE 10249847
(43) Veröffentlichungstag der Anmeldung: 20.07.2005
(73) Patentinhaber: Mavig GmbH, 81829 München (DE)
(72) Erfinder: KUHN, Peter, 81545 München (DE)
(74) Vertreter: Körfer, Thomas
(86) Internationale Anmeldenummer: PCT/EP2003/011707
(87) Internationale Veröffentlichungsnummer: WO 2004/038276

(56) Entgegenhaltungen:
- DE-A- 3 720 010
- DE-U- 9 301 268
- US-A- 2 819 918
- US-A- 4 203 683
- US-A- 4 566 663
- US-A- 5 505 424

## Beschreibung

Die Erfindung betrifft eine gelenkige Aufhängung insbesondere für Trägersysteme von elektronischen Geräten wie beispielsweise Monitore.

Aufhängungen für Trägersysteme sind heute z. B. im medizintechnischen Bereich im Einsatz. Bei jeder Art von Eingriff, Behandlung, Untersuchung oder Überwachung am Patienten stehen dem behandelnden Fachpersonal i.a. die unterschiedlichsten durch elektronische Geräte bzw. Systeme realisierte Unterstützungsfunktionen wie Messen, Visualisieren, Beleuchten usw. zur Verfügung. Da diese elektronischen Geräte in Abhängigkeit von der Lage des Patienten und des Fachpersonals variabel positioniert und orientiert sein müssen, sind diese mit einem Trägersystem verbunden, das über eine gelenkige z.B. mittels Federarmen realisierte Aufhängvorrichtung an der Decke oder an den Wänden des Raumes befestigt ist und in mehreren translatorischen und rotatorischen Freiheitsgraden innerhalb eines begrenzten Bewegungsbereiches ausgerichtet werden kann.

Um möglichst leichtgängige Dreh- und Kippbewegungen über einen weiten Dreh- und Kippbereich in den Gelenken der Aufhängung zu erzielen, kommen fast ausschließlich sphärische und teilsphärische Kugelgelenke zum Einsatz. Aus dem Gebrauchsmuster DE 93 01 268 U1 ist beispielsweise bekannt, dass die gelenkige Verbindung aus einem eine Gelenkkugel tragenden Schnittstellenbauteil und einem ein Gelenkkugel-Lager beinhaltenden Anschlussflansch besteht. Die Dreh- und Kippbewegung des Kugelgelenks erfolgt durch eine teilsphärische Gleitbewegung der Gelenkkugel im Gelenkkugel-Lager. Während das Innendurchmesserprofil des Kugelgelenk-Lagers dem teilsphärischen Oberflächenprofil der Gelenkkugel entspricht, weist das Außendurchmesserprofil korrespondierend dem Innenprofil des Anschlussflansches eine rein zylindrische Form auf.

Diese geometrische Vereinfachung, die den Fertigungs- und Montageaufwand des Kugelgelenk-Lagers reduziert, wird aber mit erheblichen mechanischen Nachteilen erkauft. Da Kräfte an Berührungsflächen zwischen verschiedenen Bauteilen nur in orthogonaler Richtung zur Fläche übertragen werden können, werden im Anschlussflansch wirkende Kräfte aufgrund der zylinderförmigen Schnittflächen zwischen Anschlussflansch und Gelenkkugel-Lager nur senkrecht zur Zylindermantelfläche bzw. senkrecht zu den Zylindergrundflächen in das Gelenkkugel-Lager geleitet. Eine radialsymmetrische, zum Mittelpunkt der Gelenkkugel gerichtete Krafteinleitung in das Gelenkkugel-Lager, wie sie beim Übergang vom Gelenkkugel-Lager zur Gelenkkugel aufgrund der sphärischen Grenzfläche wirkt, ist nicht möglich. Eine homogene Krafteinwirkung in das Kugelgelenk-Lager und eine damit einhergehende optimale Kraftweiterleitung an die Gelenkkugel, die zu einer der ursprünglich am Anschlussflansch einwirkenden Kraft proportionalen Auslenkung der Gelenkkugel führt, ist somit nicht möglich. Vielmehr führt die nicht-radiale Komponente der auf das Gelenkkugel-Lager einwirkenden Kraft, die nicht auf die Gelenkkugel übertragen werden kann, zu einer unerwünschten Kraftrückwirkung an den Kontaktflächen zwischen Anschlussflansch und Gelenkkugel-Lager sowie an den Befestigungselementen zwischen beiden Bauteilen. Diese unerwünschten Kraftrückwirkungen führen an den besagten Stellen zu Bauteilverschleiß aufgrund von Stauchungs-, Dehnungs- oder Reibungsvorgängen.

Der vorliegenden Erfindung liegt daher die Aufgabe zugrunde, eine gelenkige Aufhängung zu schaffen, bei der durch geeignete geometrische Auslegung der Gelenkbauteilkombination Gelenkkugel - Gelenkkugel-Lager - Gelenk-Anschlussflansch ein homogener d.h. radialsymmetrischer Kraftfluss zwischen diesen Bauteilen gewährleistet ist.

Die Aufgabe wird durch die Merkmale des Anspruchs 1 gelöst.

Die homogene Kraftflussführung sorgt für eine optimale Kraftaufteilung in radialer und tangentialer Richtung und damit eine adäquate rotatorische und translatorische Gelenkauslenkung. Unerwünschte, Verschleißerscheinungen an den Gelenkbauteilen werden somit minimiert.

Der homogene radialsymmetrische Kraftfluss im Gelenk wird in Abgrenzung zum Stand der Technik durch die Gelenkbauteile Aufhängungsteil, Gleitband und Verbindungsteil realisiert, die die Funktionen der Gelenkkugel, des Gelenkkugel-Lagers und des Anschlussflansches des Standes der Technik wahrnehmen. Durch die Gleitbewegung eines am teilsphärischen Innendurchmesserprofil des Verbindungsteiles befestigten ringförmigen Gleitbandes auf der teilsphärischen Außendurchmesseroberfläche des Aufhängungsteiles entsteht eine gelenkige Kipp- und Drehbewegung zwischen Aufhängungs- und Verbindungsteil. Durch die Verwendung eines ringförmigen Gleitbandes mit konstanter Dicke sowie durch die Ausbildung von teilsphärischen Kontaktflächen zwischen Aufhängungsteil, Gleitband und Verbindungsteil werden die Kräfte, an den Gelenkstellen radialsymmetrisch und damit homogen geführt.

In den Unteransprüchen sind vorteilhafte Weiterbildungen der Erfindung angegeben.

Durch die gelenkige Bewegung des Verbindungsteils zum Aufhängungsteil entsteht zwischen beiden Bauteilen eine Schlitzöffnung, die abhängig vom jeweiligen Gelenkwinkel eine unterschiedliche Schlitzöffnungsweite aufweist. Zur Vermeidung von Staubablagerungen in der Schlitzöffnung und zum Schutz vor Verletzungen durch Einklemmung einer Person in der Schlitzöffnung weist die Aufhängung vorzugsweise eine Verkleidung auf, die die Schlitzöffnung einerseits möglichst raumsparend und andererseits für alle Öffnungsweiten möglichst umfassend abdeckt.

Zur Vermeidung von Schäden am in der Aufhängung integrierten Installationskabel ist vorzugsweise eine Begrenzung der Drehbewegung des Verbindungsteiles gegenüber dem Aufhängungsteil auf 360° vorgesehen.

Die Erfindung wird nachstehend unter Bezugnahme auf die Zeichnung anhand eines Ausführungsbeispiels näher beschrieben. Es zeigen:
- Fig. 1:: einen Axialschnitt durch ein Ausführungsbeispiel der erfindungsgemäßen gelenkigen Aufhängung im unausgelenkten Zustand;
- Fig. 2:: den Axialschnitt der erfindungsgemäßen gelenkigen Aufhängung im ausgelenkten Zustand;

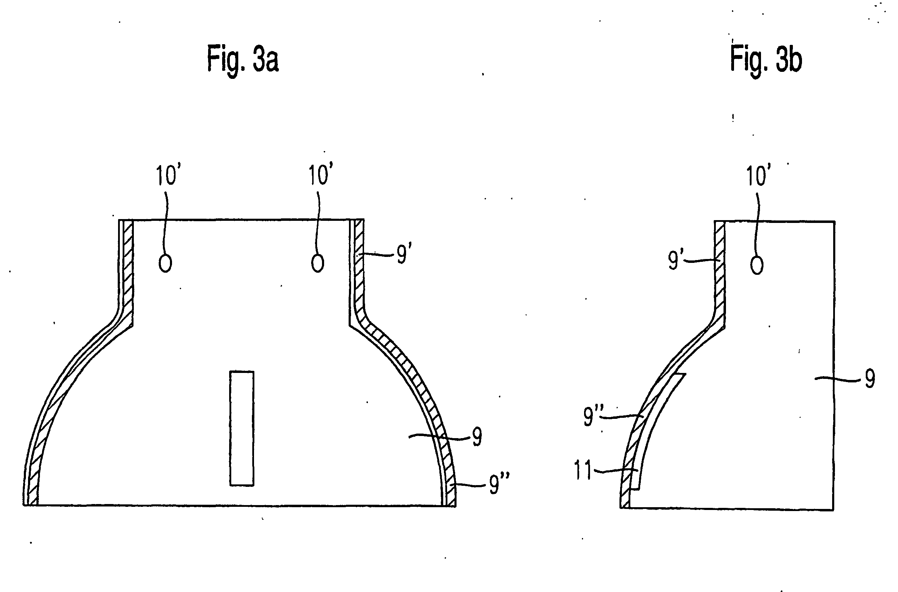

- Fig. 3a:: einen Querschnitt durch die Verkleidung und
- Fig. 3b:: einen um 90° gegenüber Fig. 3a gedrehten Querschnitt durch die verkleidung.

Die erfindungsgemäße gelenkige Aufhängung wird nachfolgend unter Bezugnahme auf die Zeichnung erklärt.

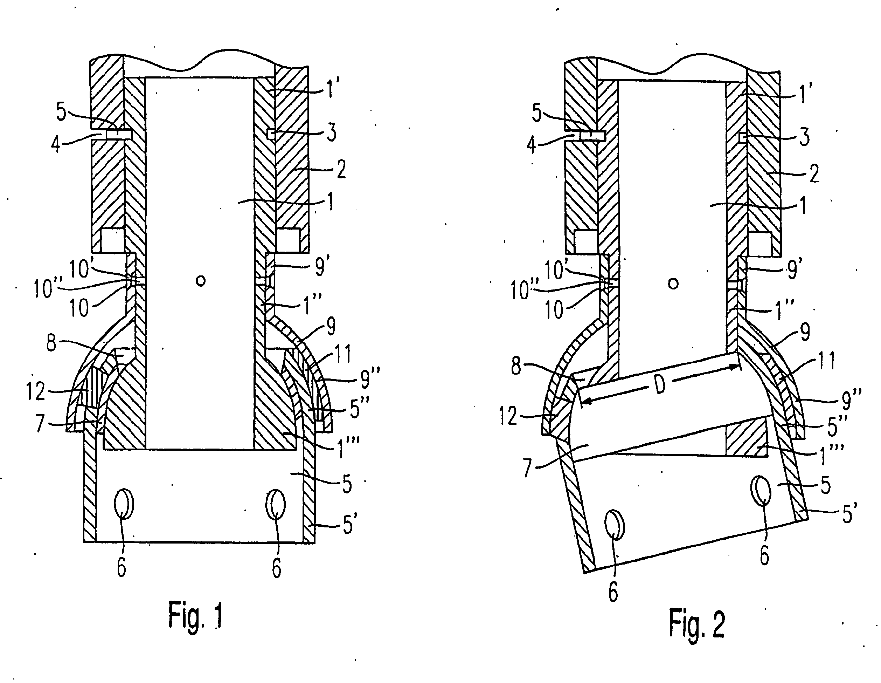

In Fig. 1 ist im Querschnitt ein Ausführungsbeispiel einer gelenkigen Aufhängung im unausgelenkten Zustand dargestellt. Die gelenkige Aufhängung besteht aus dem rotationssymmetrischen Aufhängungsteil 1. Dieses rotationssymmetrische Aufhängungsteil 1 besteht aus drei verschiedenen Abschnitten 1', 1" und 1' ' '. Der zylindrische Abschnitt 1', der in seiner vollen Länge in einem hohlzylindrischen Federarm 2 eingeführt ist, weist einen konstanten Außendurchmesser auf, der dem Innendurchmesser des hohlzylindrischen Federarms 2 entspricht. Außerhalb des Innenzylinders des Federarms 2 schließt sich an den zylindrischen Abschnitt 1' des rotationssymmetrischen Aufhängungsteils 1 ein weiterer zylindrischer Abschnitt 1" mit einem konstanten, gegenüber dem Abschnitt 1' reduzierten Außendurchmesser an. Den Abschluss des rotationssymmetrischen Aufhängungsteils 1 bildet ein Abschnitt 1"' mit einem Außendurchmesserprofil, das entsprechend dem Anspruch 1 eine teilsphärische Kontur besitzt. Im dargestellten Ausführungsbeispiel vergrößert sich der Außendurchmesser des Abschnitts 1"' vom konstanten Außendurchmesser des zylindrischen Abschnitts 1" entsprechend einem teilsphärischen Profil bis zum Äquatordurchmesser einer dem teilsphärischen Profil entsprechenden Halbkugel am Ende des Abschnitts 1' ' ' , das einem Ende des rotationssymmetrischen Aufhängungsteiles 1 entspricht.

Die Befestigung des rotationssymmetrischen Aufhängungsteils 1 im Abschnitt 1' am Federarm. 2 erfolgt über eine Passverbindung. Dazu ist am Zylindermantel des zylindrischen Abschnittes 1' des rotationssymmetrischen Aufhängungsteils 1 eine ringförmige Nut 3 vorgesehen. Auf gleicher Höhe zur ringförmigen Nut 3 des rotationssymmetrischen Aufhängungsteils 1 sind am hohlzylindrischen Federarm entlang einer .Umfanglinie in gleichen Winkelabständen Durchgangsöffnungen 4 angebracht. Über ein vorzugsweise U-förmiges Passelement 5, das sich jeweils zur Hälfte in der ringförmigen Nut 3 und in der Durchgangsbohrung 4 steckt, wird eine Bewegung des Aufhängungsteils 2 in axialer Richtung und in Drehrichtung relativ zum Federarm 2 verhindert.

Die Gelenkbauteilkombination besteht neben dem Aufhängungsteil 1 aus dem Verbindungsteil 5. Dieses Verbindungsteil 5 ist in einen hohlzylindrischen Abschnitt 5' mit konstanten Außen- und Innendurchmesserprofil und in einen Abschnitt 5' ' mit teilsphärischer Innen- und Außendurchmesserkontur untergliedert. Im dargestellten Ausführungsbeispiel weist das Verbindungsteil 5 über alle Abschnitte 5' und 5' ' eine konstante Wanddicke auf. Der Innendurchmesser des hohlzylindrischen Abschnitts 5' ist im dargestellten Ausführungsbeispiel um ein bestimmtes Maß größer als der maximale Außendurchmesser des Aufhängungsteils 1. Der Innendurchmesser des Verbindungsteils 5 verjüngt sich im Abschnitt 5' ' ausgehend vom Innendurchmesser des Abschnitts 5' gemäß der teilsphärischen Außendurchmesserkontur des Aufhängungsteils 1 im Abschnitt 1' ' bis zu dem in Fig. 2 dargestellten Innendurchmesser D, so dass bei Aufhängung des Verbindungsteils 5 am Aufhängungsteil 1 im unausgelenkten Zustand der Abstand zwischen dem Aufhängungsteil 1 im Abschnitt 1' ' ' und dem Verbindungsteil 5 im Abschnitt 5' ' über den gesamten teilsphärischen Konturverlauf konstant ist. Der Innendurchmesser D legt den maximalen Kippwinkel des Verbindungsteils 5 zum Aufhängungsteil 1 fest. Aufgrund der konstanten Wandstärke des Verbindungsteils 5 über die gesamte Mantelfläche weist der Außendurchmesserverlauf im Abschnitt 5' ' denselben teilsphärischen Verlauf wie die korrespondierende Innendurchmesserkontur und die Außendurchmesserkontur des Aufhängungsteils 1 im Abschnitt 1' ' ' auf.

Zur Befestigung des Trägersystems sind im dargestellten Ausführungsbeispiel im hohlzylindrischen Abschnitt 5' des Verbindungsteils 5 entlang einer Umfanglinie in gleichen Winkelabständen mehrere Bohrungen 6 angebracht.

Das dritte Bauteil der Gelenkbauteilkombination, das die analoge Funktion des Gelenkkugel-Lagers im Stand der Technik wahrnimmt, ist ein ringförmiges Gleitband 7. Dieses ringförmige Gleitband ist an der innenseitigen Zylindermantelfläche im Abschnitt 5' ' des Verbindungsteils 5 befestigt. Da es den hülsenförmigen, teilsphärisch geformten Zwischenraum zwischen Aufhängungsteil 1 im Abschnitt 1' ' ' und Verbindungsteil 5 im Abschnitt 5' ' vollständig ausfüllt, weist es eine konstante Dicke auf und besitzt ein dem teilsphärischen Außendurchmesserprofil des Aufhängungsteils 1 entsprechendes Innendurchmesserprofil sowie ein dem teilsphärischen Innendurchmesserprofil des Verbindungsteils 5 entsprechendes Außendurchmesserprofil.

Die zur Abdeckung der zwischen Aufhängungsteil 1 und Verbindungsteil 5 vorliegenden Schlitzöffnung 8 nötige Verkleidung 9 besteht aus dem hohlzylindrischen Abschnitt 9' mit konstanten Außen- und Innendurchmesser und dem hohlzylindrischen Abschnitt 9' ' mit teilsphärischem Konturverlauf. Im dargestellten Ausführungsbeispiel weist die Verkleidung 9 eine konstante Wanddicke auf, die kleiner als die Tiefe der beim Übergang von Abschnitt 1' zu Abschnitt 1" gebildeten Stufe des Aufhängungsteils 1 ist. Der konstante Innendurchmesser im Abschnitt 9' entspricht dem konstanten Außendurchmesser des Aufhängungsteils 1 im Abschnitt 1' '. Der Innendurchmesser im Abschnitt 9' ' vergrößert sich ausgehend vom Innendurchmesser im Abschnitt 9' gemäß der teilsphärischen Außendurchmesserkontur des Verbindungsteils 5 im Abschnitt 5' ' bis zum Äquatordurchmesser einer dem teilsphärischen Profil entsprechenden Hohlkugel, so dass bei raumsparender Abdeckung der Schlitzöffnung 8 und des Abschnittes 5' ' des Verbindungsteiles 5 durch den Verkleidungsabschnitt 9' ' der Verkleidung 9 der Abstand zwischen dem Verbindungsteil 5 im Abschnitt 5'' und der Verkleidung 9 im Abschnitt 9'' über den gesamten teilsphärischen Konturverlauf konstant ist.

Die Verkleidung 9 ist in ihrem Abschnitt 9' über mehrere an einer Umfanglinie in gleichen Winkelabständen verteilte Verbindungen 10 derart an den Abschnitt 1" des Aufhängungsteils 1 befestigt, dass der gesamte Abschnitt 1' von der Verkleidung 9 umschlossen ist. Die Verbindungen 10 werden durch auf der Umfangslinie der Verkleidung 9 in gleichen Winkelabständen verteilte Durchgangsbohrungen 10' und durch dazu konzentrische Bohrungen 10" im Aufhängungsteil 1 sowie dazu passende Verbindungsstifte (in Fig. 1 und 2 nicht dargestellt) realisiert.

Die zur Begrenzung der Drehbewegung des Verbindungsteiles 5 gegenüber dem Aufhängungsteil 1 erforderliche Rippe 11 ist auf dem Innenprofil der Verkleidung 9 im Abschnitt 9" in axialer Richtung befestigt. Dazu weist die Rippe 11 auf ihrer Unterseite in axialer Richtung dieselbe teilsphärische Kontur auf wie das Innenprofil der Verkleidung 9 im Abschnitt 9''. Um die Drehfreiheit zwischen Verkleidung 9 und Verbindungsteil 5 zu gewährleisten, weist die Oberseite der Rippe 11 ebenfalls einen entsprechenden teilsphärischen Konturverlauf auf, wobei die konstante Höhe der Rippe 11 zwischen Ober- und Unterseite kleiner als der konstante Abstand zwischen der Außenkontur des Verbindungsteils 5 und dem Innenprofil der Verkleidung 9 ausgelegt ist. Die zur Rippe 11 korrespondierende Rippe 12 ist auf der Außenkontur des Verbindungsteiles 5 im Abschnitt 5' ' ebenfalls in axialer Richtung angeordnet. Um die Drehfreiheit zwischen Verkleidung 9 und Verbindungsteil 5 auch durch die Rippe 12 nicht zu behindern, weist die Rippe 12 auf ihrer Oberseite auch einen entsprechenden teilsphärischen Konturverlauf auf. Die konstante Höhe der Rippe 12 ist kleiner dimensioniert als der konstante Abstand zwischen Außenkontur des Verbindungsteiles 5 und der Innenkontur der Verkleidung 9.

Die erfindungsspezifische Funktionsweise der gelenkigen Aufhängung ergibt sich aus der Gleitbewegung des ringförmigen Gleitbandes 7 mit dessen teilsphärisch gewölbter Innenoberfläche auf der teilsphärisch gewölbten Außenoberfläche des Aufhängungsteiles 1 im Abschnitt 1' ' , die eine dazu korrespondierende Kipp- und/oder Drehbewegung des Verbindungsteiles 5 gegenüber dem Aufhängungsteil 1 bewirkt. Aufgrund der konstanten Dicke des ringförmigen Gleitbandes 7 sowie der teilsphärischen Ausführung sämtlicher Berührungsflächen zwischen Aufhängungsteil 1, Gleitband 7 und Verbindungsteil 5 ist ein homogener radialsymmetrischer Kraftfluss innerhalb des sphärischen Gelenks möglich, womit der Verschleiß der Gelenkteile deutlich gemindert wird.

## Patentansprüche

1. Gelenkige Aufhängung, insbesondere für Monitor-Trägersysteme, mit einem Aufhängungsteil (1) mit einem Abschluss (1' ' ') mit teilsphärischem Außenprofil, einem an dem Aufhängungsteil (1) aufgehängten Verbindungsteil (5), einem zwischen dem Aufhängungsteil (1) und dem Verbindungsteil (5) angeordnetem Gleitteil, welches eine gleitende Dreh- und Kippbewegung des verbindungsteils (5) gegenüber dem Aufhängungsteil (1) ermöglicht,
**dadurch gekennzeichnet,**
**dass** das Gleitteil ein ringförmiges Gleitband (7) ist, das eine konstante Dicke besitzt und dessen Innenprofil dem sphärischen Außenprofil des Abschlusses (1"') des Aufhängungsteils (1) entspricht, und
**dass** das Verbindungsteil (5) einen Abschluss (5") mit teilsphärischem Innenprofil hat, das einem sphärischen Außenprofil des ringförmigen Gleitbandes (7) entspricht.

2. Gelenkige Aufhängung nach Anspruch 1,
**dadurch gekennzeichnet,**
**dass** das Aufhängungsteil (1) außerhalb des teilsphärischen Abschlusses (1' ' ' ) eine zylindrische Form und das Verbindungsteil außerhalb seines teilsphärischen Abschlusses eine hohlzylindrische Form besitzt.

3. Gelenkige Aufhängung nach Anspruch 1 oder 2,
**dadurch gekennzeichnet,**
**dass** die Aufhängung des Verbindungsteils (5) am Aufhängungsteil (1) durch Aufliegen des am sphärischen Abschluss (5") des Verbindungsteils (5) befestigten ringförmigen Gleitbandes (7) auf dem sphärischen Abschluss (1"') des Aufhängungsteiles (1) erfolgt.

4. Gelenkige Aufhängung nach einem der Ansprüche 1 bis 3,
**dadurch gekennzeichnet,**
**dass** die gelenkige Aufhängung in drei Freiheitsgraden durch eine Dreh- und Kippbewegung des ringförmigen Gleitbandes (7) auf der sphärisch gewölbten Fläche des Abschlusses (1' ' ') des Aufhängungsteiles (1) erfolgt.

5. Gelenkige Aufhängung nach einem der Ansprüche 1 bis 4, **dadurch gekennzeichnet,**
**dass** zur Befestigung eines Trägersystems am Verbindungsteil (5) unterhalb dessen sphärischen Abschlusses (5") mehrere Bohrungen (6) vorgesehen sind.

6. Gelenkige Aufhängung nach einem der Ansprüche 1 bis 5, **dadurch gekennzeichnet,**
**dass** zur Abdeckung einer sich durch die gelenkige Aufhängung zwischen dem Aufhängungsteil (1) und dem Verbindungsteil (5) bildenden Schlitzöffnung (8) eine Verkleidung (9) vorgesehen ist, welche die Schlitzöffnung (8) enganliegend und alle gelenkstellungsabhängigen Schlitzöffnungsweiten umfassend abdeckt.

7. Gelenkige Aufhängung nach Anspruch 6,
**dadurch gekennzeichnet,**
**dass** die Verkleidung (9) aus einem hohlzylindrischen Abschnitt (9') und einem sich daran anschließenden hohlkugelsegmentförmigen Abschnitt (9'') mit einer in beiden Abschnitten konstanten und dünnen Wandstärke besteht und der Innendurchmesser des hohlzylindrischen Abschnitts (9') dem minimalen Außendurchmesser des Aufhängungsteils (1) und der Innendurchmesser des hohlkugelsegmentförmigen Abschnitts (9' ') dem um ein bestimmtes Maß vergrößerten sphärisch verlaufenden Außendurchmesser des Verbindungsteils (5) entspricht.

8. Gelenkige Aufhängung nach Anspruch 7,
**dadurch gekennzeichnet,**
**dass** die Verkleidung (9) im hohlzylindrischen Abschnitt (9') über mindestens eine Verbindung (10) am Aufhängungsteil (1) im Bereich seines minimalen Außendurchmessers befestigt ist.

9. Gelenkige Aufhängung nach Anspruch 7,
**dadurch gekennzeichnet,**
**dass** eine Begrenzung des Drehbereichs des Verbindungsteiles (5) zur Winkellage des Aufhängungsteiles (1) erfolgt.

10. Gelenkige Aufhängung nach Anspruch 9,
**dadurch gekennzeichnet,**
**dass** auf der Innenseite des hohlkugelsegmentförmigen Abschnitts (9") der Verkleidung eine Rippe (11), deren Höhe geringer ist als der Abstand zwischen Verkleidung (9) und dem Verbindungsteil (5), und gleichzeitig auf der Außenseite des Verbindungsteiles (5) im Bereich dessen sphärischen Abschlusses (5") eine weitere Rippe (12), die ebenfalls geringer ist als der Abstand zwischen Verkleidung (9) und Verbindungsteil (5), befestigt ist, wobei die Rippen (11, 12) sich nach einer 360°-Relativbewegung des Verbindungsteiles (5) zum Aufhängungsteil (1) gegenseitig blockieren.

## Claims

1. Articulated suspension device, in particular for monitor support systems, comprising a suspension part (1) having an end (1'") with a part-spherical external profile, a connecting part (5) suspended on the suspension part (1), a sliding part disposed between the suspension part (1) and the connecting part (5) and enabling a sliding rotational and tilting movement of the connecting part (5) relative to the suspension part (1),
**characterized in**
**that** the sliding part is an annular sliding band (7), which has a constant thickness and the internal profile of which corresponds to the spherical external profile of the end (1'") of the suspension part (1), and
**that** the connecting part (5) has an end (5") with a part-spherical internal profile, which corresponds to a spherical external profile of the annular sliding band (7).

2. Articulated suspension device according to claim 1,
**characterized in**
**that** the suspension part (1) outside of the part-spherical end (1'") has a cylindrical shape and the connecting part outside of its part-spherical end has a hollow cylindrical shape.

3. Articulated suspension device according to claim 1 or 2,
**characterized in**
**that** the suspension of the connecting part (5) on the suspension part (1) is effected by supporting the annular sliding band (7), which is fastened to the spherical end (5") of the connecting part (5), on the spherical end (1"') of the suspension part (1).

4. Articulated suspension device according to one of claims 1 to 3,
**characterized in**
**that** the articulated suspension in three degrees of freedom is effected by a rotational and tilting movement of the annular sliding band (7) along the spherically curved surface of the end (1"') of the suspension part (1).

5. Articulated suspension device according to one of claims 1 to 4,
**characterized in**
**that** for fastening a support system to the connecting part (5) below the spherical end (5") thereof a plurality of bores (6) are provided.

6. Articulated suspension device according to one of claims 1 to 5,
**characterized in**
**that** for covering a slot aperture (8) produced by the articulated suspension between the suspension part (1) and the connecting part (5) an enclosure (9) is provided, which covers the slot aperture (8) in a close-fitting manner and so as to comprehend all joint-position-dependent slot aperture widths.

7. Articulated suspension device according to claim 6,
**characterized in**
**that** the enclosure (9) comprises a hollow cylindrical portion (9') and an adjoining hollow spherical-segment-shaped portion (9*"*) of an, in both portions, constant and thin wall thickness, and the internal diameter of the hollow cylindrical portion (9') corresponds to the minimum external diameter of the suspension part (1), and the internal diameter of the hollow spherical-segment-shaped portion (9") corresponds to the, by a specific amount, enlarged spherically profiled external diameter of the connecting part (5).

8. Articulated suspension device according to claim 7,
**characterized in**
**that** the enclosure (9) in the hollow cylindrical portion (9') is fastened by at least one connection (10) to the suspension part (1) in the region of the minimum external diameter thereof.

9. Articulated suspension device according to claim 7,
**characterized in**
**that** a restriction of the range of rotation of the connecting part (5) relative to the angular position of the suspension part (1) occurs.

10. Articulated suspension device according to claim 9,
**characterized in**
**that** on the inner side of the hollow spherical-segment-shaped portion (9") of the enclosure a rib (11) is fastened, the height of which is smaller than the clearance between enclosure (9) and the connecting part (5), and at the same time on the outer side of the connecting part (5) in the region of the spherical end (5") thereof a further rib (12) is fastened, which is likewise smaller than the clearance between enclosure (9) and connecting part (5), wherein the ribs (11, 12) mutually block after a 360° relative movement of the connecting part (5) relative to the suspension part (1).

## Revendications

1. Suspension articulée, en particulier pour des systèmes porteurs de moniteurs, ayant une partie de suspension (1) comportant une fermeture (1' ' ') avec un profilé extérieur partiellement sphérique, un élément de liaison (5) accroché à la partie de suspension (1), un élément coulissant disposé entre la partie de suspension (1) et la partie de liaison (5) qui permet le mouvement de rotation et de basculement coulissant de la partie de liaison (5) par rapport à la partie de suspension (1),
**caractérisée**
**en ce que** la partie de coulissement est une bande coulissante (7) annulaire qui présente une épaisseur constante et dont le profil interne correspond au profil externe sphérique de la fermeture (1' ' ') de la partie de suspension (1), et
**en ce que** la partie de liaison (5) présente une fermeture (5") avec un profilé interne partiellement sphérique qui correspond à un profilé externe sphérique de la bande de coulissement annulaire (7).

2. Suspension articulée selon la revendication 1, **caractérisée en ce que** la partie de suspension (1) à l'extérieur de la fermeture partiellement sphérique (1' ' ') possède une forme cylindrique et la partie de liaison à l'extérieur de sa fermeture partiellement sphérique présente une forme cylindrique creuse.

3. Suspension articulée selon la revendication 1 ou 2, **caractérisée en ce que** la suspension de la partie de liaison (5) sur la partie de suspension (1) s'effectue par application de la bande coulissante annulaire (7), fixée sur la fermeture sphérique (5' ') de la partie de liaison (5), sur la fermeture sphérique (1' ' ') de la partie de suspension (1).

4. Suspension articulée selon l'une des revendications 1 à 3, **caractérisée en ce que** la suspension articulée s'effectue avec trois degrés de liberté par un mouvement de rotation et de basculement de la bande coulissante annulaire (7) sur la surface courbée sphérique de la fermeture (1''') de la partie de suspension (1).

5. Suspension articulée selon l'une des revendications 1 à 4, **caractérisée en ce que**, pour la fixation d'un système porteur sur la partie de liaison (5) au-dessous de sa fermeture sphérique (5' '), sont prévus plusieurs alésages (6).

6. Suspension articulée selon l'une des revendications 1 à 5, **caractérisée en ce que**, pour le recouvrement d'une ouverture fendue (8) formée par la suspension articulée entre la partie de suspension (1) et la partie de liaison (5), est prévu un habillage (9) qui recouvre l'ouverture fendue (8) de façon étroite et englobe toutes les largeurs d'ouverture de fente dépendant de la position d'articulation.

7. Suspension articulée selon la revendication 6, **caractérisée en ce que** l'habillage (9) consiste en un tronçon (9') cylindrique creux et un tronçon (9") en forme de segment sphérique creux contigu, avec une épaisseur de paroi constante dans les deux tronçons et mince, et le diamètre interne du tronçon cylindrique creux (9') correspond au diamètre externe minimum de la partie de suspension (1) et le diamètre interne du tronçon en forme de segment sphérique creux (9' ' ) correspond à un diamètre extérieur s'étendant sur une dimension déterminée, sphériquement agrandie de la partie de liaison (5).

8. Suspension articulée selon la revendication 7, **caractérisée en ce que** l'habillage (9) dans le tronçon cylindrique creux (9') est fixé par au moins une liaison (10) sur la partie de suspension (1) dans la zone de son diamètre extérieur minimum.

9. Suspension articulée selon la revendication 7, **caractérisée en ce qu'**une limitation de la zone de rotation de la partie de liaison (5) s'effectue par rapport à la position angulaire de la partie de suspension (1).

10. Suspension articulée selon la revendication 9, **caractérisée en ce que**, sur le côté interne du tronçon en forme de segment sphérique creux (9") de l'habillage, se trouve une nervure (11) dont la hauteur est inférieure à la distance entre l'habillage (9) et la partie de liaison (5) et simultanément, sur le côté extérieur de la partie de liaison (5) au niveau de sa fermeture sphérique (5'), se situe une autre nervure (12) qui est également inférieure à la distance entre l'habillage (9) et la partie de liaison (5), dans laquelle les nervures (11, 12) se bloquent réciproquement après un mouvement relatif de 360° de la partie de liaison (5) par rapport à la partie de suspension (1).
